# EUROPEAN PATENT APPLICATION

(11) **EP 2 365 489 A1**
(43) Date of publication of application: **14.09.2011**
(21) Application number: 09827800.5
(22) Date of filing: 30.07.2009
(51) Int. Cl.: G21C 3/344

(54) **STRUCTURE OF A GRID FOR A NUCLEAR REACTOR FUEL ASSEMBLY**

(30) Priority: 19.11.2008 RU 2008145619
(71) Applicant: Otkrytoe Aktsionernoe Obschestvo "Mashinostroitelny Zavod", Moskovskaya obl. Elektrostal 144001 (RU)
(72) Inventor: BABENKO, Yury Nikolayevich, Elektrostal Moskovskaya obl. 144009 (RU); VERESHCHAK, Valery Grigoryevich, Elektrostal Moskovskaya obl. 144000 (RU); IVANOV, Alexandr Viktorovich, Elektrostal Moskovskaya obl. 144001 (RU); ODINTSOV, Nikolay Vladimirovich, Elektrostal Moskovskaya obl. 144000 (RU); PETROV, Igor Valentinovich, Elektrostal Moskovskaya obl. 144009 (RU); TSIRIN, Stanislav Igorevich, Elektrostal Moskovskaya obl. 144009 (RU); PEREPELITSA, Nikolay Ivanovich, Obninsk Kaluzhskaya obl. 249032 (RU); POMET'KO, Ryshard Sidorovich, Obninsk Kaluzhskaya obl. 249038 (RU); SOLONIN, Vladimir Ivanovich, Moscow 119526 (RU)
(74) Representative: Einsel, Martin
(86) International application number: PCT/RU2009/000378
(87) International publication number: WO 2010/059073

(57) **Abstract**

The invention relates to nuclear engineering and is intended to be used in the structures of the spacer and mixing grids of fuel assemblies for nuclear power reactors. The grid structure of a fuel assembly with a triangular arrangement of fuel elements is made up of cells. The cells are in the form of faceted tubes and are adjoined by the tube faces. The longitudinal axes of these faces are parallel to the fuel assembly axis and are situated at the nodes of a triangular grid. The end parts of each cell are polyhedral. The middle part of at least a group of cells is provided with grooves. The faces of one of the end parts of each of these cells are offset around the longitudinal axis of the cell relative to the analogous faces of the other end part of the same cell. All the faces are parallel to the longitudinal axis of the cell. Three non-adjacent faces are disposed around the axis of each cell at an interval of 120 DEG and are of equal width, the width being greater than that of the other faces, thereby making it possible to form heat carrier channels when the cells are joined. The invention makes it possible to improve operational reliability by increasing the critical heat flux owing to the formation of extended cross flows along the fuel element rows, which flows cause the efficient mixing of the heat carrier between the cells without removing liquid from the fuel element surfaces.

## Description

### FIELD OF THE INVENTION

The invention relates to nuclear engineering, in particular to spacer and mixing devices for a fuel assembly in which the fuel rods, or fuel elements, are arranged in a triangular pattern, and may be used in water-moderated water-cooled power reactors.

### BACKGROUND OF THE INVENTION

A prior art mixing (stirring) grid structure comprises cells for fuel elements arranged in a triangular pattern in a fuel assembly (French Patent No. 26680477, cl. G21C 3/34, published October 4, 1990). The cross-sectional areas of these cells at each vertical level have the shape of a polygon and are offset at an angle around the cell axis at a distance proportional to the axial distance from the lower end face surface. The helical cell surface produced as a result causes the coolant to flow in circular transverse currents around the fuel elements and contribute to the mixing and, therefore, leveling out of the heat contents and temperatures of the coolant in the through section of the fuel assembly.

This grid design is deficient because of inadequate reliability of the fuel assembly in operation since swirling of the vapor-liquid coolant flow around each fuel element at the outlet portion of the fuel assembly causes undesirable separation of the liquid from the surface thereof by resultant centrifugal forces. Local separation of liquid from the heat-emitting surface leads to a heat transfer crisis and, therefore, to insufficient quantity of the critical heat flow.

The closest related prior art of the claimed grid structure in technical idea is the grid structure for a fuel assembly comprising cells, and fuel rods arranged in a triangular pattern (Russian Patent No. 2,273,062, cl. G21C 3/34, published March 27, 2006).

Each cell in the prior art grid has the shape of a polyhedral pipe having a longitudinal axis extending in parallel to the fuel assembly axis. Six faces of a cell are parallel to the axis thereof, and two trios of faces are inclined by varying the width of the faces along the cell axis. Furthermore, the faces of one trio have a width that is smaller at the upper end face of the cell and larger at the lower end face of the cell, and the faces of the other trio have a width that is larger at the upper end face of the cell and smaller at the lower end face of the cell. The faces of each trio are provided at a step of 120° around the cell axis. Moreover, the grid cells are placed at the nodes of the triangular grid, their faces parallel to the cell axes adjoining one another and oriented in the nodes to define inclined channels for the coolant flow. The inclined channels cause the coolant to swirl around each fuel element, thereby intensifying the mixing and contributing to the leveling out of the heat contents and temperatures of the single-phase coolant in the through section of the fuel assembly.

Insufficient reliability of the fuel assembly in operation is a deficiency of the design of the grid that is immediate prior art of the claimed invention because swirling of the vapor-liquid coolant flow around each fuel element in the inclined channels of the outlet portion of the fuel assembly causes undesirable separation of the liquid from the surface thereof. Local separation of the liquid from the heat-emitting surface leads to a heat transfer crisis and, therefore, to insufficient quantity of the critical heat flow.

### SUMMARY OF THE INVENTION

It is a technical object of this invention to develop a grid structure that improves reliability of the fuel assembly in operation by increasing the critical heat flow as extensive transverse currents are produced to cause effective coolant mixing between the cells along the rows of fuel elements without separating the liquid from the surface of the fuel elements when a vapor-liquid mixture is formed in the through section of the fuel assembly.

The object of the invention is achieved in a grid structure for a fuel assembly in which the fuel elements are arranged in a triangular pattern, said grid comprising cells in the shape of faceted tubes having longitudinal axes extending parallel to the fuel assembly axis and placed at the nodes of the triangular grid, said cells adjoining one another at their faces, the outlying parts of each cell having the shape of a polyhedron, and the middle part of at least a group of cells being provided with grooves, the faces of one of the outlying parts of each of these cells being turned around the longitudinal axis of a cell relative to similar faces of the other outlying part of the same cell, all the faces being parallel to the longitudinal axis of the cell, and the three nonadjacent faces that are arranged around the axis of each cell at a step of 120° have the greatest identical width compared to the other faces to produce channels for coolant flow when the cells are joined.

In an embodiment of this invention, the grooves are inclined to the right in some of the group of cells, and to the left in the other cells relative to the longitudinal axis of the cell in order to produce an additional transverse component in the coolant flowing between the rows of fuel elements, the cells that have identically inclined grooves extending in one direction of the triangular grid only, and the cells that have grooves inclined to the right and left alternating in each of the two other directions of the grid.

In another embodiment, the grooves of all cells are inclined in one direction relatively to the longitudinal axis of the cell.

Furthermore, the depth of at least three grooves arranged uniformly in the middle part of each cell is sufficient for centering a fuel element in the cell.

This combination of features helps produce extensive transverse currents that cause the coolant to be mixed effectively between the cells along the rows of fuel elements and do not cause separation of the liquid from the surface of fuel elements on formation of a vapor-liquid mixture in the channels in comparison with the immediate prior art invention.

Furthermore, when short inclined grooves 0.3H long are provided in cells of height H, short inclined projections are produced inside them to fulfill at least one of the following spacing functions, in particular, preventing fuel elements from curving over the entire period of fuel assembly operation. Moreover, there may only be a slight possibility of the coolant that flows into a cell swirling because of the short length of the inclined projections.

Tests were conducted on a fuel assembly of nineteen rods (tubes) of 9.1 mm outer diameter and 1 m long at an average linear (longitudinal) air flow velocity of 35 to 40 m/sec to study the possibility of transverse coolant currents forming in the fuel assembly provided with a grid of the claimed structure. The rods were arranged in a triangular pattern at a spacing of 12.75 mm with the help of two fragments of standard spacing grids provided at the ends thereof. The fuel assembly was placed in a hexagonal case fitting wrench size 60 mm. The test grid structure, with cells having grooves at an inclination angle α = 30°, was placed at a distance of 50 mm from the inlet fragment of the standard spacing grid. A dynamic flow head indicator was used to take measurements in the tests at a distance of 250 mm from the outlet section of the grid structure and calculate the average transverse convective transfer rate in fractions of the average flow rate in the bundle.

The tests confirmed formation of transverse currents along the rows of rods. The ratio of the transverse air flow rate to the longitudinal flow rate is 0.1 at a distance of 250 mm, which is quite a significant value in comparison with other grid structures studied.

Compared to the immediate prior art, therefore, the claimed invention improves fuel assembly reliability in operation owing to an increase in the critical heat flow because of extensive transverse currents that cause the coolant to be mixed effectively between the cells along the rows of fuel elements, and does not promote separation of the liquid from the surface of the fuel elements upon formation of a vapor-liquid mixture in the channels.

### BRIEF DESCRIPTION OF THE DRAWING

The idea of the claimed invention is illustrated in the following drawings, wherein:

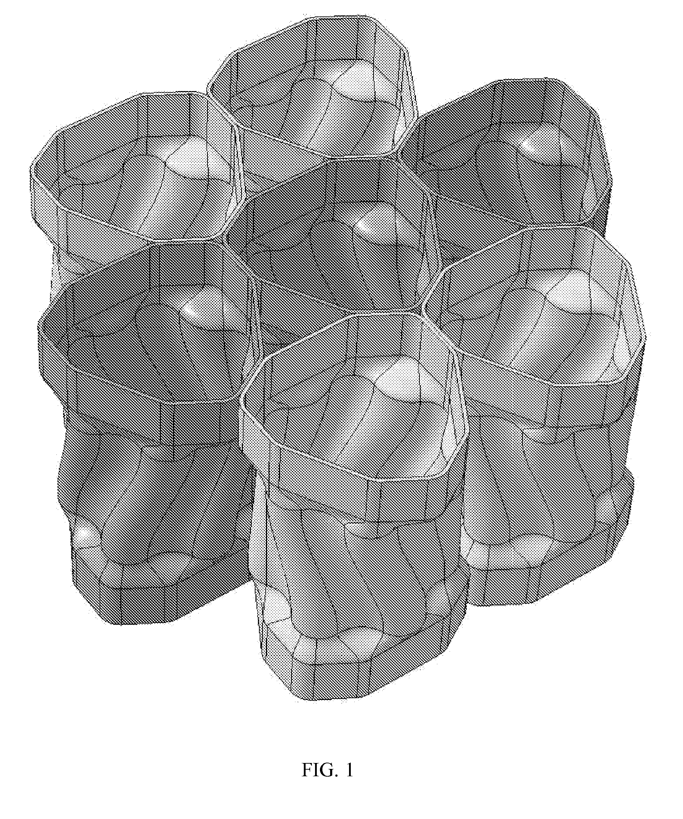

FIG. 1 is a three-dimensional view of a grid structure in which some of the cells have grooves inclined to the right, and others have grooves inclined to the left;
FIG. 2 is a view of the grid structure, with (b) in the center showing a front view, and (a) above and (c) below showing two types of cross-section thereof;

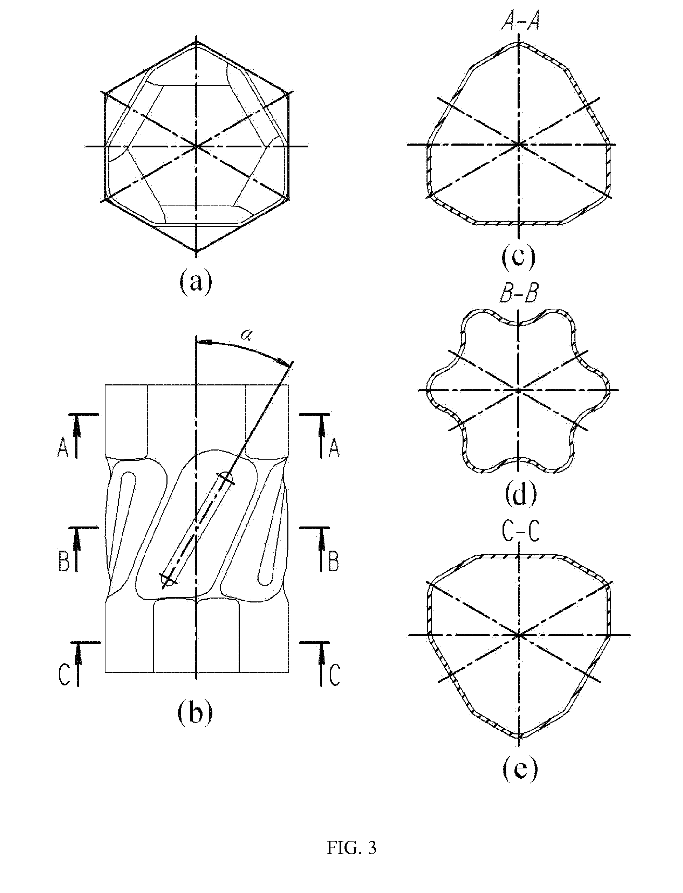

FIG. 3 shows, at left, a top (a) and front (b) views of a cell having grooves inclined to the right, and, at right, views (c) to (e) of three types of cross-section of the cell;

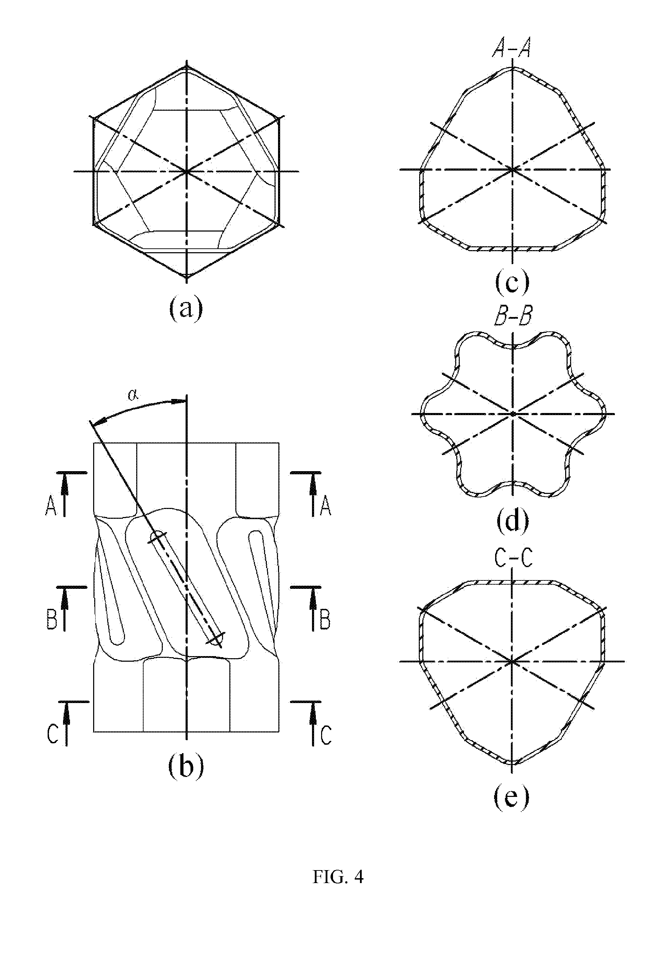

FIG. 4 shows, at left, a top (a) and (b) views of the cell having grooves inclined to the left, and, at right, views (c) to (e) of three types of cross-section thereof; and

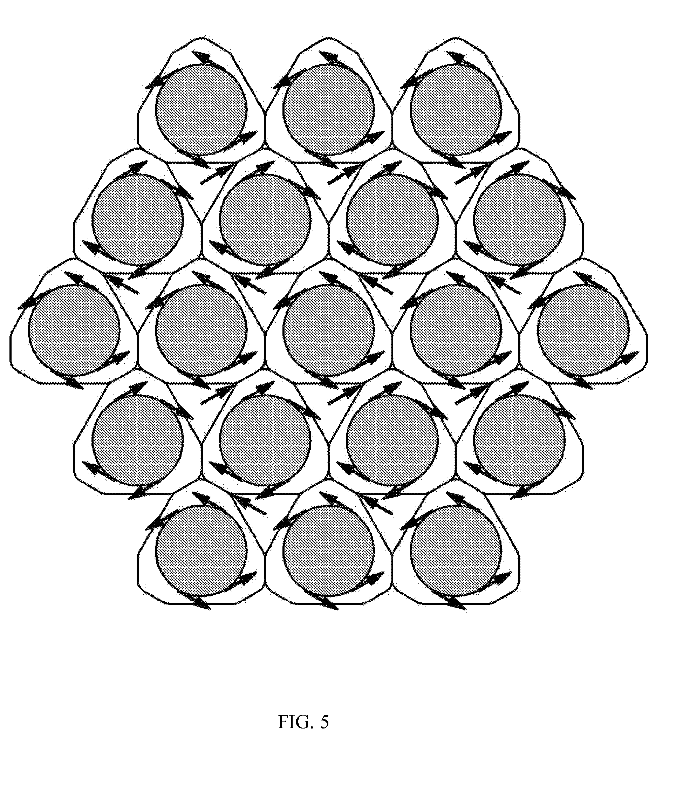

FIG. 5 illustrates the operating principle of the grid structure, in which arrows show directions of transverse coolant flow between the fuel elements.

### DESCRIPTION OF A PREFERRED EMBODIMENT OF THE INVENTION

The structure of a grid for a fuel assembly in which fuel elements 1 are arranged in a triangular pattern consists of interconnected cells 2 and 3 in the form of tubes having a polyhedral shape at the outlying portions thereof, and, in the middle portion thereof, being provided with grooves inclined to the right and to the left relative to the longitudinal axis of the cell. The longitudinal axes of cells 2 and 3 are parallel to the fuel assembly axis and placed at the nodes of the triangular grid.

The faces of cells 2 and 3 extending from the edges of the grooves to one edge of a cell are turned relative to the faces extending from the other edges of the grooves to the other end of the same cell and are parallel to the longitudinal axis of the cells. Three nonadjacent faces 4 positioned around the axis of each cell at a step of 120° have the greatest identical width compared to the other faces so as to be able to form coolant flow channels upon connection (contact) of the cells. In this event, cells having grooves inclined similarly are disposed in one direction 5 of the triangular grid only, and cells having grooves inclined to the right and to the left are disposed in an alternating pattern in each of two other directions 6 and 7.

In another embodiment, the grooves of all the cells are inclined to one side relative to the longitudinal axes of the cells.

All cells 2 and 3 may be manufactured from tubular metal material and bonded together by welding at points where their faces are in tight contact.

The depth of the three grooves disposed uniformly in the middle portion of a cell may be chosen so as to be sufficient to allow fuel element centering.

The grid structure is used in operation as follows:

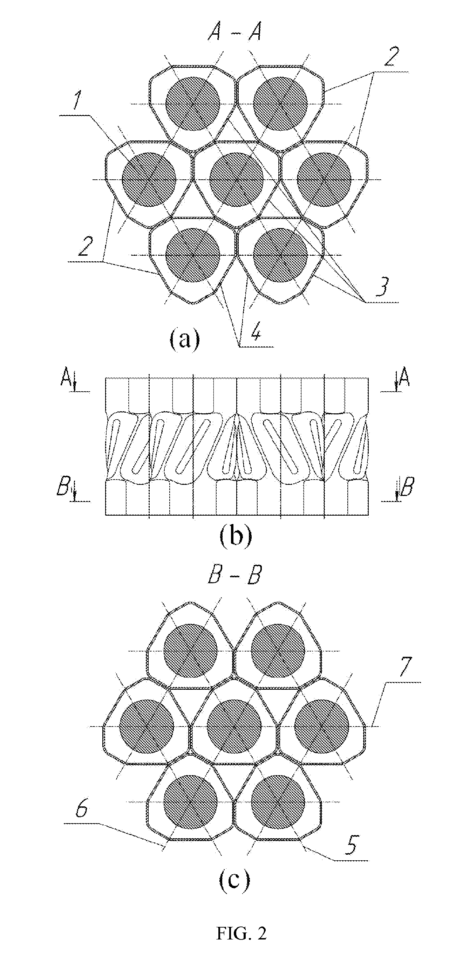

A grid built on the basis of the claimed design (FIG. 2) is arranged in a fuel assembly normally to the longitudinal axis thereof and secured to the longitudinal power elements of the fuel assembly; for example, the grid rim is secured to the corners of the fuel assembly frame. No cell may be provided at points where the guiding channels, which are longitudinal power elements of the fuel assembly as well, extend through the grid. Fuel elements 1 are run through the inside of cells 2 and 3. The fuel assembly in the nuclear reactor core is washed over by coolant that reduces the surface temperature of fuel elements 1. A transverse velocity component is generated in the coolant flow entering the channels formed by the grid structure so as to produce extensive transverse currents flowing along the rows of fuel elements 1, causing the coolant to be stirred effectively without separating the liquid from the surface of the fuel elements as a vapor-liquid mixture is formed in the through section of the fuel assembly. As a result, the critical heat flow increases in comparison with that of the immediate prior art and, therefore, the reliability of the fuel assembly in operation improves.

Furthermore, the inclined projections formed on the inside surface of a cell after the grooves have been provided may help fulfill at least one of the spacing functions, such as preventing the fuel elements from curving over the full service life of the fuel assembly.

## Claims

1. A grid structure for a fuel assembly in which the fuel elements are arranged in a triangular pattern, said grid structure comprising cells in the shape of faceted tubes having axes that are parallel to the axis of the fuel assembly and are positioned at the nodes of the triangular grid, and adjoining one another at the faces thereof, wherein the outlying parts of each cell have the shape of a polyhedron, and grooves are provided in the middle part of at least a group of cells, the faces of the outlying parts of each of these cells being turned around the longitudinal axis of the cell relative to similar faces of the other outlying part of the same cell, all the faces being parallel to the longitudinal axis of the cell, and the three nonadjacent faces located around the axis of each cell at a step of 120° have the greatest identical width in comparison with the other faces so as to produce coolant channels when the cells are joined.

2. The grid structure as claimed in claim 1, wherein one part of the group of cells has grooves inclined to the right, and the other part has grooves inclined to the left in respect of the longitudinal axis of the cell, the cells that have grooves inclined in one direction being located in one direction of the triangular grid only, and the cells that have grooves inclined to the right and left alternating in each of the two other directions of the grid.

3. The grid structure as claimed in claim 1, wherein the grooves of all the cells are inclined in one direction relative to the longitudinal axis of the cell.

4. The grid structure as claimed in claim 1, wherein some of the cells are missing.

5. The grid structure as claimed in claim 1, wherein the depth of at least three grooves located uniformly in the middle part of each cell is sufficient for a fuel cell to be centered in the cell.
